# EUROPEAN PATENT APPLICATION

(11) **EP 3 923 164 A2**
(43) Date of publication of application: **15.12.2021**
(21) Application number: 21204140.4
(22) Date of filing: 22.10.2021
(51) Int. Cl.: G06F 16/9536, G06Q 50/00

(54) **METHOD AND APPARATUS OF PRESENTING INFORMATION, ELECTRONIC DEVICE AND STORAGE MEDIUM**

(30) Priority: 16.11.2020 CN 202011282530
(71) Applicant: BEIJING BAIDU NETCOM SCIENCE TECHNOLOGY CO., LTD., No.10 Shangdi 10th Street Haidian District Beijing 100085 (CN)
(72) Inventor: KANG, Jiamei, Beijing, 100085 (CN); CHE, Shengran, Beijing, 100085 (CN); DING, Meiyuan, Beijing, 100085 (CN); HU, Lina, Beijing, 100085 (CN); ZHAO, Huibin, Beijing, 100085 (CN)
(74) Representative: Stöckeler, Ferdinand

(57) **Abstract**

A method and an apparatus of presenting information, an electronic device and a storage medium are provided, which relate to a field of information flow and may be used for cloud platform and cloud service. The method includes: displaying an information presenting interface containing at least one shared information, wherein each of the at least one shared information is presented in a display area including a reference identification indicating a recommendation level for the each of the at least one shared information; acquiring a trigger operation of an object on a reference identification of a target shared information in the information presenting interface; determining a level value of recommending the target shared information by the object according to a role information of the object, in response to the trigger operation; and updating the reference identification of the target shared information according to the level value of recommending the target shared information by the object.

## Description

### TECHNICAL FIELD

The present disclosure relates to a field of computer technology, in particular to a field of information flow technology, and more specifically to a method of presenting information, an apparatus of presenting information, an electronic device and a storage medium.

### BACKGROUND

With a rapid development of computer technology, various information spread and flow more and more smoothly. Effective information spreading may be required. For example, knowledge related to working methods, experience, opinions and other information is conducive to improving work efficiency.

In a process of realizing the present disclosure, it is found that values of some information cannot be better highlighted when spreading information by using relevant technologies, thereby resulting in a waste of information resources.

### SUMMARY

A method of presenting information, an apparatus of presenting information, an electronic device, and non-transitory computer-readable storage medium having computer instructions stored thereon are provided.

According to a first aspect, a method of presenting information is provided, and the method includes: displaying an information presenting interface containing at least one shared information, wherein each of the at least one shared information is presented in a display area including a reference identification indicating a recommendation level for the each of the at least one shared information; acquiring a trigger operation of an object on a reference identification of a target shared information in the information presenting interface; determining a level value of recommending the target shared information by the object according to a role information of the object, in response to the trigger operation; and updating the reference identification of the target shared information according to the level value of recommending the target shared information by the object.

According to a second aspect, an apparatus of presenting information is provided, and the apparatus includes: a display module configured to display an information presenting interface containing at least one shared information, wherein each of the at least one shared information is presented in a display area including a reference identification indicating a recommendation level for the each of the at least one shared information; a first acquisition module configured to acquire a trigger operation of an object on a reference identification of a target shared information in the information presenting interface; a responding module configured to determine a level value of recommending the target shared information by the object according to a role information of the object, in response to the trigger operation; and an updating module configured to update the reference identification of the target shared information according to the level value of recommending the target shared information by the object.

According to a second aspect, an electronic device is provided, including: at least one processor; and a memory communicatively connected to the at least one processor, wherein the memory stores instructions executable by the at least one processor, and the instructions, when executed by the at least one processor, cause the at least one processor to implement the method of the present disclosure described above.

According to a third aspect, a non-transitory computer-readable storage medium having computer instructions stored thereon is provided, and the computer instructions allow a computer to implement the method of the present disclosure described above.

It should be understood that the content described in the summary is not intended to identify critical or important features of the embodiments of the present disclosure, nor is it intended to limit the scope of the present disclosure. Other features of the present disclosure will become easy to understand by the following description.

### BRIEF DESCRIPTION OF THE ACCOMPANYING DRAWINGS

The accompanying drawings are for a better understanding of the present disclosure and do not constitute a limitation of the present disclosure, in which:
FIG. 1 schematically shows an exemplary system architecture to which a method and an apparatus of presenting information may be applied according to the embodiments of the present disclosure;
FIG. 2 schematically shows a flowchart of a method of presenting information according to the embodiments of the present disclosure;
FIG. 3 schematically shows a diagram of an information presenting interface displayed on a client according to the embodiments of the present disclosure;
FIG. 4 schematically shows a flowchart of updating a reference identification according to a level value of recommending a target shared information by an object according to the embodiments of the present disclosure;
FIG. 5 schematically shows a flowchart of sorting comments according to the embodiments of the present disclosure;
FIG. 6 schematically shows a diagram in which each shared information in the information presenting interface corresponds to a comment area according to the embodiments of the present disclosure;
FIG. 7 schematically shows a flowchart of displaying an information presenting interface according to the embodiments of the present disclosure;
FIG. 8 schematically shows a schematic diagram of the information presenting interface according to the embodiments of the present disclosure;
FIG. 9 schematically shows a block diagram of an apparatus of presenting information according to the embodiments of the present disclosure; and
FIG. 10 schematically shows a block diagram of an electronic device suitable for implementing a method of presenting information according to the embodiments of the present disclosure.

### DETAILED DESCRIPTION

The exemplary embodiments of the present disclosure are described below with reference to the accompanying drawings, which include various details of the embodiments of the present disclosure to facilitate understanding, and which may be considered as merely illustrative. Therefore, those ordinary skilled in the art may realize that various changes and modifications may be made to the embodiments described herein without departing from the scope and spirit of the present disclosure. In addition, for clarity and conciseness, descriptions of well-known functions and structures are omitted in the following description.

In a process of realizing the present disclosure, it is found that in a group, members have backgrounds in type information, team information and project information. When learning working methods and experience, members tend to consult other members with higher grades having a same type information or different type information, or consult other members in a same team. Therefore, knowledge evaluations from the other members with higher grades or the other members in the same team have greater reference significance. In practice, some members play a role of a teacher, some members play a role of an entrepreneur, and some members play a role of an enterpriser. When learning experience and knowledge, members tend to pay attention to information shared or concerned by a member who is more capable or experienced than themselves.

However, in current methods of sharing information, the value of some information may not be highlighted, which leads to a waste of information resources. For example, a knowledge evaluation by an expert has a same responding manner as that of ordinary member. There are few experts but the experts have strong persuasion, such that evaluations by the experts may not be highlighted.

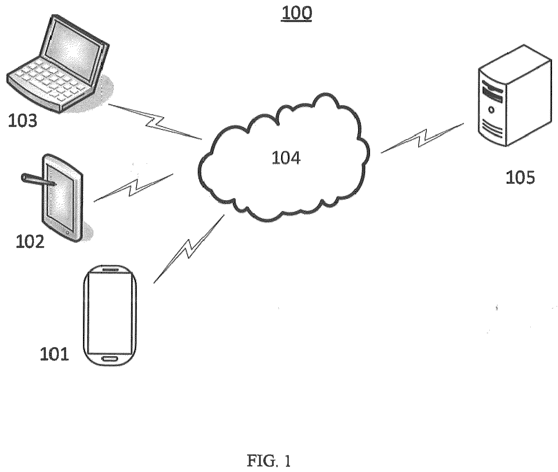

FIG. 1 schematically shows an exemplary system architecture to which a method and an apparatus of presenting information may be applied according to the embodiments of the present disclosure.

It should be noted that FIG. 1 shows only an example of a system architecture that may apply the embodiments of the present disclosure to help those skilled in the art understand the technical content of the disclosure, but it does not mean that the embodiments of the present disclosure may not be used for other devices, systems, environments or scenarios. For example, in other embodiments, the exemplary system architecture to which a method and an apparatus of presenting information may be applied may include a terminal device, but the terminal device may implement the method and the apparatus of presenting information provided in the embodiments of the present disclosure without having to interact with a server.

As shown in FIG. 1, the system architecture 100 according to the embodiments may include terminal devices 101, 102, 103, a network 104 and a server 105. The network 104 is used as a media for providing communication links between the terminal devices 101, 102, 103 and the server 105. The network 104 may include various connection types, such as a wired and/or wireless communication link, etc.

An object may interact with the server 105 through the network 104 using the terminal devices 101, 102, and 103, so as to receive or transmit messages, etc. Various communication client applications, such as knowledge reading applications, web browser applications, searching applications, instant communicating tools, mailbox clients and/or social platform software (only examples), may be installed on the terminal devices 101, 102, and 103.

The terminal devices 101, 102, and 103 may be various electronic devices having display screens and supporting web browsing, including but not limited to smartphones, tablets, laptop computers, desktop computers, etc.

The server 105 may be a server providing various services, such as a background management server (only an example) that supports content browsed by the object using the terminal devices 101, 102, and 103. The background management server may analyze and process object requests and other data received, and feedback processing results (such as web pages, information, or data acquired or generated according to the object requests) to the terminal devices.

It should be noted that the method of presenting information provided by the embodiments of the present disclosure may generally be performed by the terminal devices 101, 102, or 103. Accordingly, the apparatus of presenting information provided by the embodiments of the present disclosure may further be provided in the terminal devices 101, 102, or 103.

For example, any one or more of the terminal devices 101, 102, and 103 may display an information presenting interface containing at least one shared information shared by the object's friends or related members. When the object browses and shares information, a trigger operation may be performed on a reference identification of a target shared information in the information presenting interface. The reference identification is used to indicate a recommendation level for shared information in a display area. Any one or more of the terminal devices 101, 102, and 103 determine a level value of recommending the target shared information by the object according to a role information of the object, in response to the trigger operation. The reference identification is updated according to the level value of recommending the target shared information by the object.

It should be understood that the numbers of the terminal devices, the networks, and the servers in FIG. 1 are only schematic. There may be any number of terminal devices, networks and servers as desired.

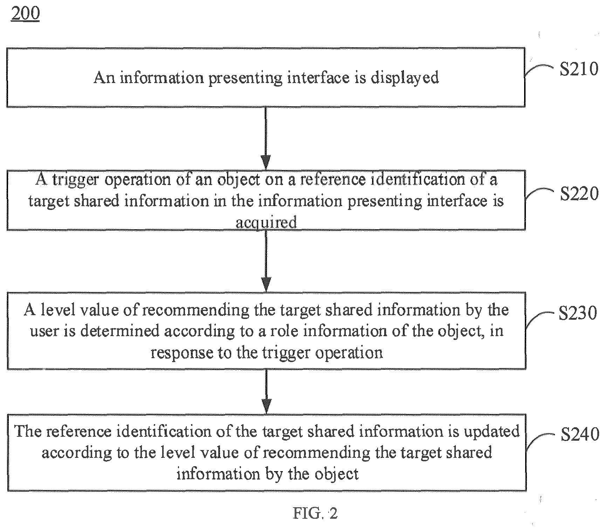

FIG. 2 schematically shows a flowchart of a method of presenting information according to the embodiments of the present disclosure.

As shown in FIG. 2, the method of presenting information includes operations S210 to S240.

In operation S210, an information presenting interface containing at least one shared information is displayed. Each of the at least one shared information is presented in a display area including a reference identification indicating a recommendation level for the each of the at least one shared information.

In operation S220, a trigger operation of an object on a reference identification of a target shared information in the information presenting interface is acquired.

In operation S230, a level value of recommending the target shared information by the object is determined according to a role information of the object, in response to the trigger operation.

In operation S240, the reference identification of the target shared information is updated according to the level value of recommending the target shared information by the object.

According to the embodiments of the present disclosure, the information presenting interface may be displayed through a client. For example, the information presenting interface may be displayed through an instant communicating client. The information presenting interface may be an interface for the object to browse different shared information, A type of the shared information is not limited, including but not limited to work information, living information, news information, etc. Alternatively, the type of the shared information includes, but is not limited to, technical information, product information, management information, strategy information, etc. According to the embodiments of the present disclosure, the shared information includes, but is not limited to, articles, pictures, audio, video, and the like.

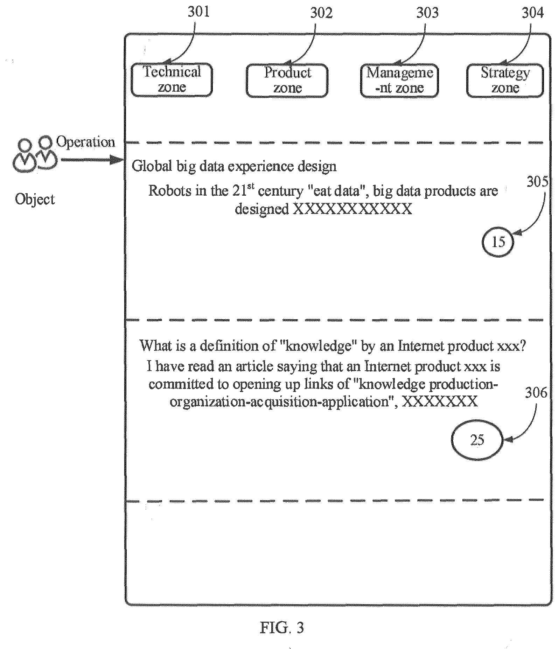

FIG. 3 schematically shows a diagram of an information presenting interface displayed on a client according to the embodiments of the present disclosure.

As shown in FIG. 3, a plurality of different types of information zones are provided in the information presenting interface, including a technical zone 301, a product zone 302, a management zone 303, and a strategy zone 304, for example. Each zone includes one or more shared information, the object may browse different types of shared information in these zones.

According to the embodiments of the present disclosure, each shared information is presented in a display area. For example, a shared information "Global big data experience design" is presented in a display area including a reference identification 305 between dashes, and the reference identification 305 is used to indicate a recommendation level for the shared information in the display area. A shared information "What is a definition of "knowledge" by an Internet product xxx?" is presented in a display area including a reference identification 306 between dashes, and the reference identification 306 is used to indicate a recommendation level for the shared information in the display area.

According to the embodiments of the present disclosure, the recommendation level refers to a global description of an enthusiasm degree or passion degree of different objects recommending a shared information. The recommendation level may be measured by the dimensions such as the number of likes, the number of reads and the number of forwards.

According to the embodiments of the present disclosure, a presenting form of the reference identification is not limited. For example, the reference identification may be a circular or oval icon as shown in FIG. 3. Alternatively, the reference identification may be a flower icon, or a heart-shaped icon.

According to the embodiments of the present disclosure, a dimension of the reference identification may increase with an increase of a level value of recommendation. For example, a current dimension of the reference identification 305 may indicate that a current level value of recommendation is 15, and a current dimension of the reference identification 306 may indicate that a current level value of recommendation is 25. By controlling the dimension of the reference identification to increase with the increase of the level value of recommendation, the object may refer to the dimension of the reference identification to determine whether to enter a detailed page for reading and promoting a stronger desire for discussion and learning when reading recommended knowledge.

According to the embodiments of the present disclosure, the role information of the object includes at least one of a type information, a time information, a title information, a team information and a project information. Different roles may correspond to different level values of recommendation.

For example, the type information includes, but is not limited to research, interface design, manage, finance, etc. The title information includes but is not limited to: an ordinary member, a management member, a senior management member, etc. The team information includes but is not limited to: a senior team, an intermediate team, and a junior team. The project information includes but is not limited to: a project that the object used to participate in, or a project that the object is currently participated in.

According to the embodiments of the present disclosure, for example, role information of a first object contains type information of researching, time information of 10 years, and title information of a senior management member. A level value of recommendation by the first object may be preset as 5. Role information of a second object contains type information of researching, time information of 6 years, and title information of a management member. A level value of recommendation by the second object may be preset as 3. Role information of a third object contains type information of researching, time information of 1 year, and title information of an ordinary member. A level value of recommendation by the third object may be preset as 1.

According to the embodiments of the present disclosure, an initial level value of recommendation by the object may be determined according to the role information of the object when the object registers, and the level value of recommendation by the object may be dynamically updated according to role information updated by the object. Therefore, the recommendation level of the shared information is determined more accurately.

According to the embodiments of the present disclosure, the trigger operation of the object as a like operation is taken as an example. The object may like the reference identification of the target shared information in the information presenting interface. For example, the object may like the reference identification of the shared information "Global big data experience design". Then, the role information of the object is acquired, and a level value of recommending the target shared information "Global big data experience design" by the object is determined according to the role information of the object. For example, if the level value of recommendation by the object is 3, the reference identification may be updated according to the level value 3 of recommending the target shared information by the object. For example, a value currently indicated by the reference identification is added by 3.

It should be noted that the quantization for the level value of recommendation in the present disclosure described above is only exemplary, but is not limited to this, other quantization manners existing in the art may further be included, as long as the level values of recommendation corresponding to different object roles may be distinguished.

According to the embodiments of the present disclosure, the level value of recommending the target shared information is determined according to the role information of the object, and the reference identification is updated according to the level value of recommendation, In related art, a like is generated directly according to a like operation of the object, without taking the features of the object into account. Different from the related art, in the embodiments of the present disclosure, the level value of recommending the target shared information may be determined according to the role information of the object, and the reference identification indicating the recommendation level of the target shared information in the display area may be updated. This may highlight the target shared information, promote information spreading, and make full use of information resources.

According to the embodiments of the present disclosure, the above-mentioned operation S230 may include following operations. A grade of the object is determined according to the role information of the object. The level value of recommending the target shared information by the object is determined according to the grade of the object

According to the embodiments of the present disclosure, for example, if the role information of the object contains type information of interface designing, time information of 3 years, and title information of a senior management member, the role information of the object may be matched with role standards corresponding to different levels, For example, the role information of the object matches a role standard of a third grade, then the grade of the object may be determined as the third grade.

According to the embodiments of the present disclosure, different grades correspond to different level values of recommendation. For example, a level value of recommendation for the first grade is 1, a level value of recommendation for the second grade is 2, and a level value of recommendation for the third grade is 5.

According to the embodiments of the present disclosure, for example, when an object performs a like operation (which is also materialized as a flower) on a shared article, according to the grade of the object, each time the object with a higher grade likes, the value will increase more. For example, each time a low-grade object likes, the value increases by 1, each time a middle-grade object likes, the value increases by 2, and each time a high-grade object likes, the value increases by 3.

In a group, a member has backgrounds in type information, team information and project information. When learning working methods and experience, the member tends to consult other members with higher grades having the same type information or different type information, or consult other members in the same team. Therefore, knowledge evaluations from the other members with higher grades or the other members in the same team have greater reference significance. Therefore, in terms of demand, when recommending knowledge, members with higher grades having the same type information or members in the same team may have higher weights for the knowledge evaluations.

According to the embodiments of the present disclosure, determining the level value of recommending the target shared information by the object according to the grade of the object may include a following operation. The level value of recommending the target shared information by the object is determined from a mapping table according to the grade of the object. The mapping table contains a plurality of grades and a plurality of level values of recommendation corresponding to the plurality of grades respectively.

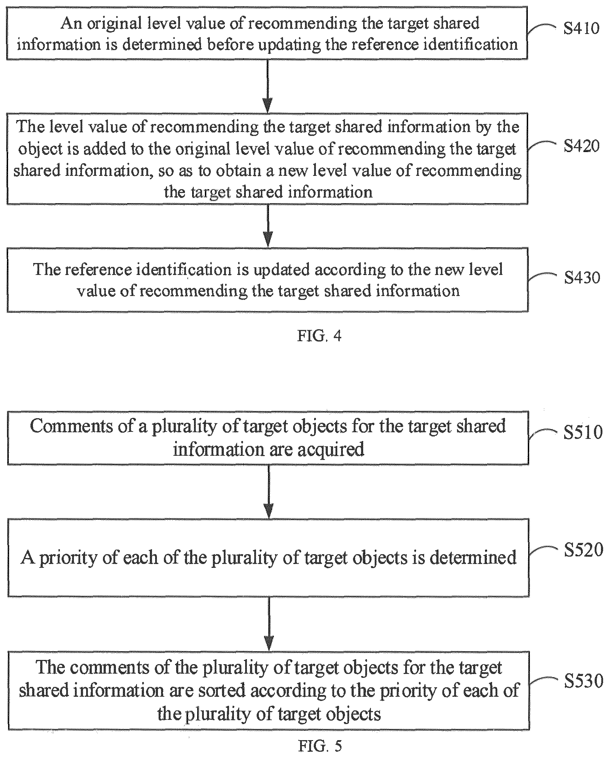

Referring to FIG. 4 to FIG. 7, the method shown in FIG. 2 is further explained with specific embodiments.

FIG. 4 schematically shows a flowchart of updating a reference identification according to a level value of recommending a target shared information by an object according to the embodiments of the present disclosure.

As shown in FIG. 4, the updating a reference identification according to a level value of recommending a target shared information by an object includes operations S410 to S430.

In operation S410, an original level value of recommending the target shared information is determined before updating the reference identification.

In operation S420, the level value of recommending the target shared information by the object is added to the original level value of recommending the target shared information, so as to obtain a new level value of recommending the target shared information.

In operation S430, the reference identification of the target shared information is updated according to the new level value of recommending the target shared information.

According to the embodiments of the present disclosure, for example, the original level value of recommending the target shared information is 15 before updating the reference identification, and the level value of recommending the target shared information by the object is 3, and the new level value of recommendation is 18.

According to the embodiments of the present disclosure, the original reference identification may be updated to a reference identification with a level value of recommendation being 18. According to the embodiments of the present disclosure, the reference identification may be an icon with a level value of recommendation.

According to the embodiments of the present disclosure, the updating a reference identification of a target shared information according to a level value of recommending a target shared information by an object may further include changing a color depth of the reference identification gradually according to the level value of recommending the target shared information by the object. The greater the level value of recommendation is, the deeper the color is. The deeper the color is, the more objects recommend the target shared information.

According to the embodiments of the present disclosure, each of the at least one shared information in the information presenting interface corresponds to a comment area. In related art, object comments are usually sorted in time order, and the object comments sorted in the time order may not cause the shared content to be better highlighted.

FIG. 5 schematically shows a flowchart of sorting comments according to the embodiments of the present disclosure.

As shown in FIG. 5, the method includes operations S510 to S530.

In operation S510, comments of a plurality of target objects for the target shared information are acquired.

In operation S520, a priority of each of the plurality of target objects is determined.

In operation S530, the comments of the plurality of target objects for the target shared information are sorted according to the priority of each of the plurality of target objects.

According to the embodiments of the present disclosure, the target objects may include all objects who have commented on the target shared information. Alternatively, the target objects may include a part of the objects who have commented on the target shared information.

According to the embodiments of the present disclosure, a grade of each of the plurality of target objects is higher than a preset grade. The preset grade may be a grade of an ordinary object, and the grade of the target object may be a high grade. The grade of the object may be determined based on the role information of the object.

In related art, when reading a recommended list of common information products, the object may not significantly obtain the comments of higher-grade members or team members for knowledge, which may lead to the object missing more useful information.

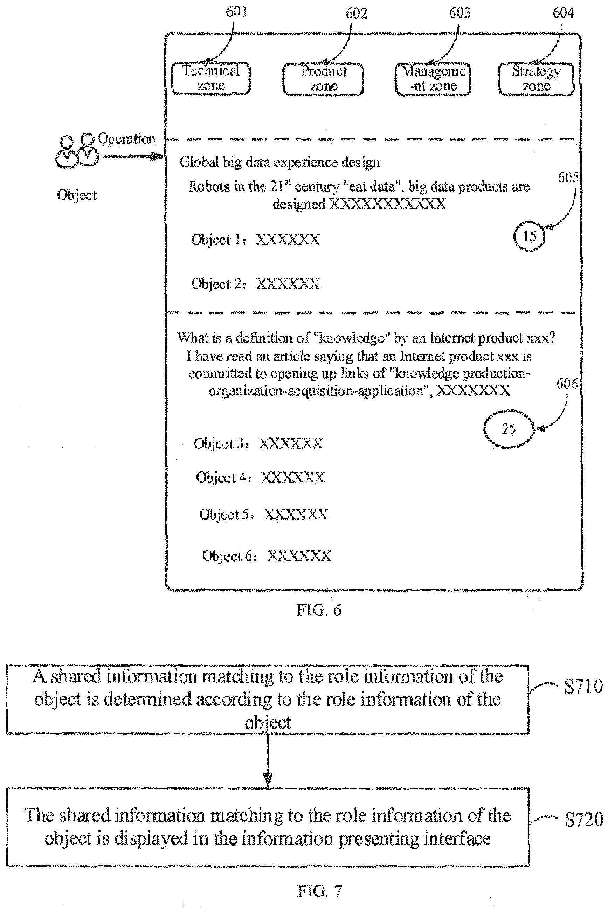

According to the embodiments of the present disclosure, FIG. 6 schematically shows a diagram in which each shared information in the information presenting interface corresponds to a comment area according to the embodiments of the present disclosure.

As shown in FIG. 6, a plurality of different types of information zones are provided in the information presenting interface, including a technical zone 601, a product zone 602, a management zone 603, and a strategy zone 604, for example. A reference identification 605 is included in a display area presenting a shared information "Global big data experience design". A reference identification 606 is included in a display area presenting a shared information "What is a definition of "knowledge" by an Internet product xxx?", Relevant description in FIG. 6 may be referred to FIG. 3, which is not repeated here.

According to the embodiments of the present disclosure, a priority of object 1 is higher than a priority of object 2. Thus, a comment of object 1 is sorted more advanced than a comment of object 2. For example, object 1 is actually an expert, and the comment of object 1 may be highlighted, thus stimulating objects' interest in reading the shared information "Global big data experience design".

Priorities of object 3 to object 6 are reduced sequentially, so that a comment of object 3 is sorted the most advanced. For example, object 3 is actually a senior management member, and the comment of object 3 may be highlighted, thus stimulating objects' interest in reading the shared information "What is a definition of "knowledge" by an Internet product xxx?".

According to the embodiments of the present disclosure, the priority of each target object may be determined according to the role information of the object. For example, the priority of each target object is determined according to the title information of each object. The title information has a higher level, the higher the priority is. Alternatively, the priority of each target object is determined according to the type information of each object, and a priority of a target object having the same type information as that of an object currently browsing knowledge is higher than a priority of a target object having a type information different from that of the object currently browsing knowledge.

According to the embodiments of the present disclosure, when reading the recommended knowledge, the object may refer to comments of members having the same type information or in the same team, so as to decide whether to enter the detailed page for reading and promoting more intense desire for discussion. By distinguishing comments for knowledge by professional experts and comments for knowledge by ordinary engineers, good knowledge tends to be highlighted.

According to the embodiments of the present disclosure, for the description of other contents in FIG. 6, the description of FIG. 3 may be referred to, which is not repeated here.

FIG. 7 schematically shows a flowchart of displaying an information presenting interface according to the embodiments of the present disclosure.

As shown in FIG. 7, the displaying an information presenting interface includes operations S710 to S720.

In operation S710, a shared information matching to the role information of the object is determined according to the role information of the object.

In operation S720, the shared information matching to the role information of the object is displayed in the information presenting interface.

According to the embodiments of the present disclosure, for example, if the role information of the object is algorithm engineer, shared information matching to the algorithm engineer may be displayed in the information presenting interface. For example, articles related to recommended algorithms may be displayed.

For example, if the role information of the object contains title information of a senior management member, a shared information matching to the senior management member may be displayed in the information presenting interface. For example, articles related to group management may be displayed.

For example, if the role information of the object indicates the object currently participating in knowledge recommendation product project, shared information matching to the knowledge recommendation product project may be displayed in the information presenting interface. For example, similar articles related to the knowledge recommendation product may be displayed.

According to the embodiments of the present disclosure, the shared information matching to the role information of the object is determined according to the role information of the object, and the shared information is displayed in the information presenting interface, so that the content interested by the object may be recommended and the object experience is improved.

According to the embodiments of the present disclosure, determining the shared information matching to the role information of the object according to the role information of the object may include following operations. Another object, from other objects, matching to the object is determined according to the role information of the object and role information of said other objects, A shared information shared by said another object matching to the object is determined. The shared information shared by said another object matching to the object is determined as the shared information matching to the role information of the object.

According to the embodiments of the present disclosure, the role information of the object may be matched to the role information of said other objects, to determine, from said other objects, another object matching to the object. For example, the role information of the object includes a type information, and another object having the same type information as the object may be determined as said another object matching to the object. For example, the role information of the object includes a team, and another object having the same team as the object may be determined as said another object matching to the object. For example, the role information of the object includes a type information and a grade, and another object having the same type information and the same grade as the object or higher grade than the object may be determined as said another object matching to the object.

According to the embodiments of the present disclosure, the object may notice knowledge liked, commented or read by high-grade members or members in the same team.

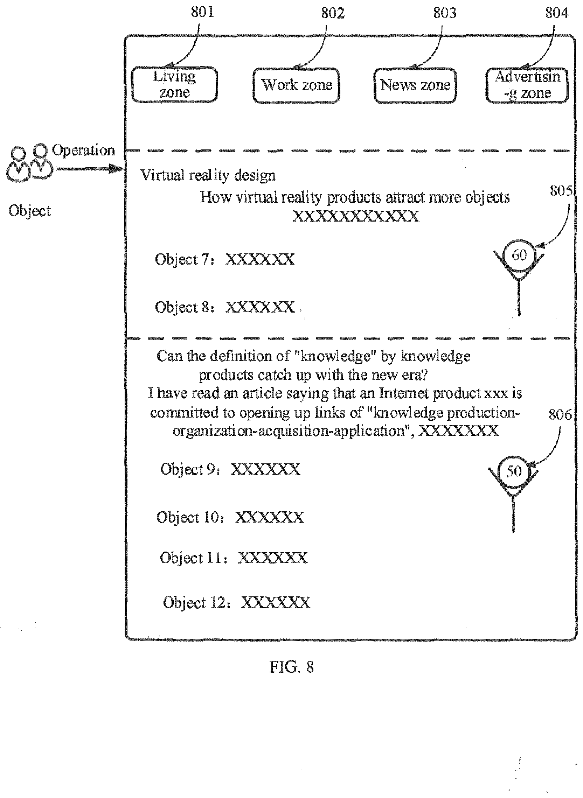

FIG. 8 schematically shows a schematic diagram of an information presenting interface according to the embodiments of the present disclosure.

As shown in FIG. 8, a plurality of different types of information zones are provided in the information presenting interface, including a living zone 801, a work zone 802, a news zone 803, and an advertising zone 804, for example. Each zone includes one or more shared information, through which the object may browse different types of shared information.

According to the embodiments of the present disclosure, each shared information is presented in a display area displaying sorted object comments and the reference identification materialized as a flower. A reference identification 805 materialized as a flower indicates that a current level value of recommendation is 60, and a reference identification 806 materialized as a flower indicates that a current level value of recommendation is 50.

According to the embodiments of the present disclosure, the method of presenting information of the present disclosure is described in specific embodiments below.

First, a group role information (type information, time information, title information, team information, project information, etc.) of any object a is acquired.

When the object a performs a like operation on a shared knowledge, the level value of recommendation for the like operation is increased according to the grade of the object. Each time an object with a higher-grade likes, the value will increase more. For example, each time a low-grade object likes, the value increases by 1, each time a middle-grade object likes, the value increases by 2, and each time a high-grade object likes, the value increases by 3.

Data containing likes, comments and reading for each shared knowledge may be acquired, marked and stored together with role information of a relevant object.

Then, a group role information (type information, time information, title information, team information, project information, etc.) of a new object b is acquired.

Knowledge liked, commented or read by high-grade members related to the object b or members in the same team with the object b is distributed according to the group role information of the object b.

Finally, the recommendation list page in front-end presents data containing likes, comments or reading of objects related to the object b.

In related art, a like is generated directly according to a like operation of the object, without taking the features of the object into account. Different from the related art, in the embodiments of the present disclosure, the level value of recommending the target shared information may be determined according to the role information of the object, and then the reference identification indicating the recommendation level of the target shared information in the display area may be updated. This may highlight the target shared information, promote information spreading, and make full use of information resources.

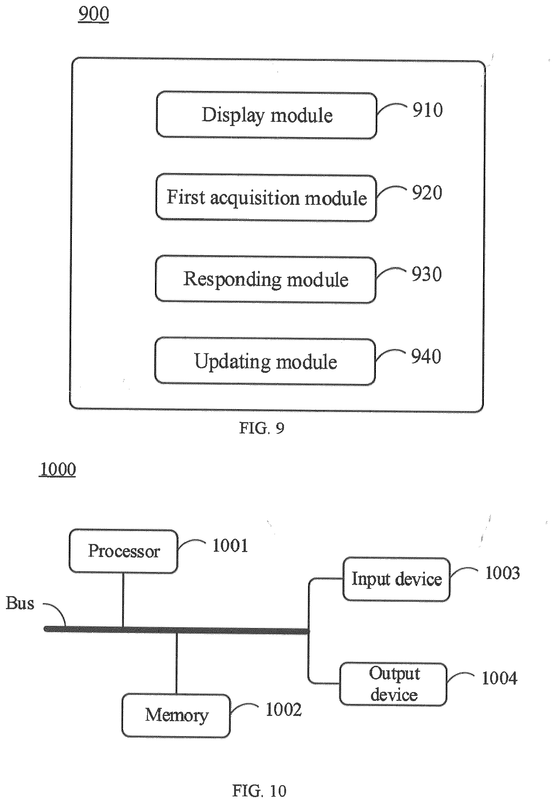

FIG. 9 schematically shows a block diagram of an apparatus of presenting information according to the embodiments of the present disclosure.

As shown in FIG. 9, the apparatus 900 of presenting information includes: a display module 910, a first acquisition module 920, a responding module 930 and an updating module 940.

The display module 910 is used to display an information presenting interface containing at least one shared information, and each of the at least one shared information is presented in a display area including a reference identification indicating a recommendation level for the each of the at least one shared information.

The first acquisition module 920 is used to acquire a trigger operation of an object on a reference identification of a target shared information in the information presenting interface.

The responding module 930 is used to determine a level value of recommending the target shared information by the object according to a role information of the object, in response to the trigger operation.

The updating module 940 is used to update the reference identification of the target shared information according to the level value of recommending the target shared information by the object.

According to the embodiments of the present disclosure, the level value of recommending the target shared information is determined according to the role information of the object, and the reference identification is updated according to the level value of recommendation. In related art, a like is generated directly according to a like operation of the object, without taking the features of the object into account. Different from the related art, in the embodiments of the present disclosure, the level value of recommending the target shared information may be determined according to the role information of the object, and then the reference identification indicating the recommendation level of the target shared information in the display area may be updated. This may highlight the target shared information, promote information spreading, and make full use of information resources.

According to the embodiments of the present disclosure, the responding module 930 includes a first determining unit and a second determining unit.

The first determining unit is used to determine a grade of the object according to the role information of the object.

The second determining unit is used to determine the level value of recommending the target shared information by the object according to the grade of the object.

According to the embodiments of the present disclosure, the second determining unit is used to determine the level value of recommending the target shared information by the object from a mapping table according to the grade of the object, and the mapping table contains a plurality of grades and a plurality of level values of recommendation corresponding to the plurality of grades respectively.

According to the embodiments of the present disclosure, the updating module 940 includes a third determining unit, a calculating unit and an updating unit.

The third determining unit is used to determine an original level value of recommending the target shared information before updating the reference identification.

The calculating unit is used to add the level value of recommending the target shared information by the object to the original level value of recommending the target shared information so as to obtain a new level value of recommending the target shared information.

The updating unit is used to update the reference identification of the target shared information according to the new level value of recommending the target shared information.

According to the embodiments of the present disclosure, the apparatus 900 of presenting information further includes a second acquisition module; a determining module and a sorting module.

The second acquisition module is used to acquire comments of a plurality of target objects for the target shared information.

The determining module is used to determine a priority of each of the plurality of target objects.

The sorting module is used to sort the comments of the plurality of target objects for the target shared information according to the priority of each of the plurality of target objects.

According to the embodiments of the present disclosure, a grade of each of the plurality of target objects is higher than a preset grade.

According to the embodiments of the present disclosure, the display module includes a fourth determining unit and a displaying unit.

The fourth determining unit is used to determine a shared information matching to the role information of the object according to the role information of the object.

The displaying unit is used to display the shared information matching to the role information of the object in the information presenting interface.

According to the embodiments of the present disclosure, the fourth determining unit includes a first determining sub-unit, a second determining sub-unit and a third determining sub-unit.

The first determining sub-unit is used to determine another object, from other objects, matching to the object according to the role information of the object and role information of said other objects.

The second determining sub-unit is used to determine a shared information shared by said another object matching to the object.

The third determining sub-unit is used to determine the shared information shared by said another object matching to the object as the shared information matching to the role information of the object.

According to the embodiments of the present disclosure, the present disclosure further provides an electronic device and a readable storage medium.

FIG. 10 shows a block diagram of an electronic device implementing the method according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the electronic device 1000 may include one or more processors 1001, a memory 1002, and interface(s) for connecting various components, including high-speed interface(s) and low-speed interface(s). The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic devices may be connected in such a manner that each device provides a part of necessary operations (for example, as a server array, a group of blade servers, or a multi-processor system). In FIG. 10, the processor 1001 is illustrated by way of example.

The memory 1002 is a non-transitory computer-readable storage medium provided by the present disclosure. The memory stores instructions executable by at least one processor, the instructions cause the at least one processor to perform the method provided in the present disclosure. The non-transitory computer-readable storage medium of the present disclosure stores computer instructions for causing a computer to execute the method provided in the present disclosure.

The memory 1002, as a non-transitory computer-readable storage medium, may be used to store non-transitory software programs, non-transitory computer-executable programs and modules, such as program instructions/modules (such as the display module 910, the first acquisition module 920, the responding module 930 and the updating module 940 shown in FIG. 9) corresponding to the method in the embodiments of the present disclosure. The processor 1001 executes various functional applications and data processing of the server by executing the non-transient software programs, instructions and modules stored in the memory 1002, thereby implementing the method in the embodiments of the method mentioned above.

The memory 1002 may include a program storage area and a data storage area. The program storage area may store an operating system and an application program required by at least one function. The data storage area may store data etc. generated by using the electronic device according to the method, In addition, the memory 1002 may include a high-speed random access memory, and may further include a non-transitory memory, such as at least one magnetic disk storage device, a flash memory device, or other non-transitory solid-state storage devices. In some embodiments, the memory 1002 may optionally include a memory provided remotely with respect to the processor 1001, and such remote memory may be connected through a network to the electronic device. Examples of the above-mentioned network include, but are not limited to the Internet, intranet, local area network, mobile communication network, and combination thereof.

The electronic device may further include an input device 1003 and an output device 1004. The processor 1001, the memory 1002, the input device 1003 and the output device 1004 may be connected by a bus or in other manners. In FIG. 10, the connection by a bus is illustrated by way of example,

The input device 1003 may receive input information of numbers or character, and generate key input signals related to user settings and function control of the electronic device, such as a touch screen, a keypad, a mouse, a track pad, a touchpad, a pointing stick, one or more mouse buttons, a trackball, a joystick, and so on. The output device 1004 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred to as programs, software, software applications, or codes) contain machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the systems and technologies described herein), or a computing system including any combination of such back-end components, middleware components or front-end components, The components of the system may be connected to each other by digital data communication (for example, a communication network) in any form or through any medium. Examples of the communication network include a local area network (LAN), a wide area network (WAN), and Internet.

The computer system may include a client and a server, The client and the server are generally far away from each other and usually interact through a communication network. The relationship between the client and the server is generated through computer programs running on the corresponding computers and having a client-server relationship with each other.

According to the embodiments of the present disclosure, the level value of recommending the target shared information is determined according to the role information of the object, and the reference identification is updated according to the level value of recommendation. In related art, a like is generated directly according to a like operation of the object, without taking the features of the object into account. Different from the related art, in the embodiments of the present disclosure, the level value of recommending the target shared information may be determined in combination with the role information of the object, and then the reference identification indicating the recommendation level of the target shared information in the display area may be updated. This may highlight the target shared information, promote information spreading, and make full use of information resources.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the present disclosure shall be contained in the scope of protection of the present disclosure.

## Claims

1. A method of presenting information, comprising:
displaying (S210) an information presenting interface containing at least one shared information, wherein each of the at least one shared information is presented in a display area comprising a reference identification indicating a recommendation level for the each of the at least one shared information;
acquiring (S220) a trigger operation of an object on a reference identification of a target shared information in the information presenting interface;
determining (S230) a level value of recommending the target shared information by the object according to a role information of the object, in response to the trigger operation; and
updating (S240) the reference identification of the target shared information according to the level value of recommending the target shared information by the object.

2. The method of claim 1, wherein the determining a level value of recommending the target shared information by the object according to a role information of the object, in response to the trigger operation comprises:
determining a grade of the object according to the role information of the object; and
determining the level value of recommending the target shared information by the object according to the grade of the object.

3. The method of any one of preceding claims, wherein the determining the level value of recommending the target shared information by the object according to the grade of the object comprises:
determining the level value of recommending the target shared information by the object from a mapping table according to the grade of the object, wherein the mapping table contains a plurality of grades and a plurality of level values of recommendation corresponding to the plurality of grades respectively.

4. The method of any one of preceding claims, wherein the updating the reference identification of the target shared information according to the level value of recommending the target shared information by the object comprises:
determining (S410) an original level value of recommending the target shared information before updating the reference identification;
adding (S420) the level value of recommending the target shared information by the object to the original level value of recommending the target shared information, so as to obtain a new level value of recommending the target shared information, and
updating (S430) the reference identification of the target shared information according to the new level value of recommending the target shared information.

5. The method of any one of preceding claims, wherein each of the at least one shared information corresponds to a comment area, and the method further comprises:
acquiring (S510) comments of a plurality of target objects for the target shared information;
determining (S520) a priority of each of the plurality of target objects; and
sorting (S530) the comments of the plurality of target objects for the target shared information according to the priority of each of the plurality of target objects.

6. The method of any one of preceding claims, wherein a grade of each of the plurality of target objects is higher than a preset grade.

7. The method of any one of preceding claims, wherein the displaying an information presenting interface comprises:
determining (S710) a shared information matching to the role information of the object according to the role information of the object; and
displaying (S720) the shared information matching to the role information of the object in the information presenting interface.

8. The method of any one of preceding claims, wherein the determining a shared information matching to the role information of the object according to the role information of the object comprises:
determining another object, from other objects, matching to the object according to the role information of the object and role information of said other objects;
determining a shared information shared by said another object matching to the object; and
determining the shared information shared by said another object matching to the object as the shared information matching to the role information of the object.

9. The method of any one of preceding claims, wherein the role information of the object comprises at least one of a type information, a time information, a title information, a team information and a project information.

10. The method of any one of preceding claims, wherein the trigger operation comprises a like operation.

11. An apparatus (900) of presenting information, comprising:
a display module (910) configured to display an information presenting interface containing at least one shared information, wherein each of the at least one shared information is presented in a display area comprising a reference identification indicating a recommendation level for the each of the at least one shared information;
a first acquisition module (920) configured to acquire a trigger operation of a user on a reference identification of a target shared information in the information presenting interface;
a responding module (930) configured to determine a level value of recommending the target shared information by the user according to a role information of the user, in response to the trigger operation; and
an updating module (940) configured to update the reference identification of the target shared information according to the level value of recommending the target shared information by the user.

12. An electronic device (1000), comprising:
at least one processor (1001); and
a memory (1002) communicatively connected to the at least one processor (1001), wherein the memory (1002) stores instructions executable by the at least one processor (1001), and the instructions, when executed by the at least one processor (1001), cause the at least one processor (1001) to implement the method of any one of claims 1 to 10.

13. A non-transitory computer-readable storage medium having computer instructions stored thereon, wherein the computer instructions, when executed by a processor, cause a computer to implement the method of any one of claims 1 to 10.

14. A computer program comprising instructions executable by a processor, and the instructions, when executed by the processor, cause the processor to implement the method of any one of claims 1 to 10,
